Europäisches Patentamt

European Patent Office

Office européen des brevets

(11) Publication number: **0 373 267**
**A1**

## EUROPEAN PATENT APPLICATION

(21) Application number: 88311742.6

(22) Date of filing: 12.12.88

(51) Int. Cl.5: **C09J 123/12, C08L 23/12**

(43) Date of publication of application:
20.06.90 Bulletin 90/25

(84) Designated Contracting States:
AT BE CH DE ES FR GR IT LI LU NL SE

(71) Applicant: **Fairbank, David**
**41 Woodcross Avenue**
**Cantley Manor Doncaster(GB)**

(72) Inventor: **Fairbank, David**
**41 Woodcross Avenue**
**Cantley Manor Doncaster(GB)**

(74) Representative: **Denmark, James**
**5 York Place**
**Leeds LS1 2SD Yorkshire(GB)**

(54) Improvements relating to laminated structures and materials.

(57) This invention comprises using amorphous polypropylene as a glue to adhere plastics sheets, specifically polypropylene sheets to other surfaces to which polypropylene does not naturally or easily adhere. Specifically polypropylene sheeting is adhered to polystyrene foam, the amorphous polypropylene being suitably modified by the addition of a synthetic resin to make the amorphous polypropylene, which melts only at a high temperature, more workable at lower temperatures, whilst maintaining its adhesive qualities.

EP 0 373 267 A1

## Improvements Relating to Laminated Structures and Materials

This invention relates to laminated structures and materials, and provides for the laminating of one surface to another.

There are of course known many adhesives for the laminating of surfaces but heretofore difficulty has been experienced in using rigid sheets of plastics material in particular sheets of polypropylene as cladding for various surfaces. The polypropylene sheet would be an ideal material for the cladding of, for example, the insides of tanks, hoppers and other containers for holding material which may be aggressive in nature, because polypropylene is relatively inert; it is for this reason however that difficulty has been experienced in laminating polypropylene sheeting to other surfaces. Furthermore, polypropylene sheet is relatively inexpensive and indeed is underused, largely because of its inability of being stuck to other surfaces.

Attempts have been made to use polypropylene sheeting as cladding material, but the fixing method has employed welding and/or fixing devices such as screws, bolts and the like which are unsatisfactory where the sheeting is to be used for containing aggressive material, particularly liquids. It is also time consuming and costly.

It has been discovered that a material which is used for blocking of electrical cables in pipes or other passages, and which, to my knowledge, has little other utility, can be used effectively for adhering polypropylene sheets to other surfaces. The said material may be used neat i.e. as it is supplied from the manufacturer, or it may be modified to suit the application, and specific examples of modification are given herein. I have already described the use of the said material for the coating of boat hulls in my prior United Kingdom Patent No. 2,126, 921 and the material is amorphous polypropylene which is atactic in nature.

Although the invention has particular application to the adhering of polypropylene sheeting to other surfaces, it is believed that the invention may have even wider application, especially using the modified amorphous polypropylene, for the general sticking together of surfaces, in particular where one of the surfaces is defined by a rigid plastics sheet material.

Amorphous polypropylene at room temperature is a rubbery solid, but it liquifies when heated. Thus, it starts to melt at a temperature of around 90°C and at a temperature in the order of 140°C it is liquid and can be mixed with liquid additives effectively. It remains in the liquid or semi-liquid state as it cools down and it is used when in this state for blocking electric cables.

According to the present invention there is provided a method of laminating two surfaces comprising using an amorphous polypropylene when in liquid or semi-liquid state as a glue between the surfaces. The amorphous polypropylene subsequently cures to form a rubbery solid bonding layer between the surfaces and aggressively adhering the surfaces together.

At least one of said surfaces preferably is defined by a rigid plastics material sheet and that plastics material sheet preferably is of polypropylene of a high molecular structure containing in the order of 10% polythene.

In a particularly suitable arrangement, the other surface to which the polypropylene sheet is laminated is preferably defined by polystyrene foam. The method can be used with all grades of polystyrene foams. It can be cured with other foams e.g. polyurethane.

When the amorphous polypropylene is used for laminating polypropylene sheeting to polystyrene foam, it is preferable that the amorphous polypropylene be modified by the addition of a synthetic resin, in particular the resin sold under the trade name ESCOREZ (R.T.M) in quantities of the order of 5% to 20% by weight. The mixing should take place when the polypropylene is heated to a temperature in the range 120°C to 140°C. ESCOREZ is a petrochemical by-product sold by Esso Oil Company under designation 1000 series. It is a solid pale coloured aliphatic resin and has a softening point in the order of 70-120°C and before it is mixed with the amorphous polypropylene it is preferably heated until it has method and can be poured into the molten polypropylene. The effect of adding this resin is that it enables the amorphous polypropylene to be worked and enhances its flowability and anchoring characteristics, that is it remains sufficiently liquid, at lower temperatures e.g. of the order of 70°C. The advantage of this is that the amorphous polypropylene can be used on a wider range of materials and in particular material which remain stable at temperatures of from 70°C upwards and therefore the addition of the resin enables the field of application of the amorphous polypropylene to be increased.

In being able to adhere polypropylene sheets to polystyrene foam presents wide possibilities as regards specific applications. Thus a block of polystyrene foam can be laminated with sheets of polypropylene on all sides to seal the polystyrene block in a sheet polypropylene case to provide a pontoon for jetties and marine stagings.

Also, by applying sheet polypropylene to the miner surfaces of a high grade polystyrene foam box carcass using amorphous polypropylene there can be provided an insulated container of light weight suitable for use as a large air freight container because of its light weight. Smaller containers such boxes for holding electronic components can be produced.

When polypropylene sheet is laminated to polystyrene foam according to the invention, it is preferred that the amorphous polypropylene should contain 5% to 15% of ESCOREZ depending upon the grade of the foam: higher grade foams require less ESCOREZ in the mix. Also it may be desirable that the polypropylene sheeting be heated and if necessary shaped before it is applied.

The amorphous polypropylene preferably is that sold by NERCULES INC. of Wilmington, Delaware, USA under the trade name A-FAX amorphous polypropylene and it may be applied by any method such a spraying or trowelling, the latter method being preferred as it is preferred that the polypropylene be applied whilst it is at its coolest temperature whilst still being capable of being spread on one of the surfaces or each surface. When a machine method is used spraying will preferably be employed, but extrusion can also be employed.

Where the amorphous polypropylene is applied between surfaces which are capable of withstanding the melting temperature of the neat amorphous polypropylene, then it may not be necessary to include any ESCOREZ. Such surfaces include metal surfaces and some plastic surfaces.

When rigid plastics material sheeting is adhered to another surface using amorphous polypropylene, if the plastics material is exposed to heat, for example by being used in a hot climate, the plastics material sheet if polypropylene will be subjected to considerable expansion under the action of the heat, and also the sunlight. The amorphous polypropylene whilst either in neat form of including the ESCOREZ resin does have some flexibility and will therefore yeild with the expansion of the plastics material, tests would indicate that it is desirable for the amorphous polypropylene to include another additive in order further to enhance its flexibility capability, in order to mitigate against the plastics sheet material detaching and sheering from the amorphous polypropylene, and in accordance with another aspect of the invention, the additive included in the amorphous polypropylene mixture for achieving this characteristic is bitumen. Bitumen may be included in the mixture either with or without the ESCOREZ resin in a quantity up to as much as 40% by weight. Tests carried out with bitumen mixed with amorphous polypropylene without ESCOREZ resin, in a quantity where the bitumen constituted 25% of the weight of the mixture yielded excellent results in that a test sample was produced whereby a sheet of polypropylene was adhered using the mixture to a steel plate, and the sample was subjected to many hours of exposure to heat and a corrosive environment. The adhesive mixture showed little or no signs of deterioration and the polypropylene sheet was still firmly adhered thereto at the end of the test. The steel sheet where exposed had deteriorated considerably due to extensive rusting.

The bitumen may be added to the amorphous polypropylene when that material has been heated up to liquid form i.e. when it has been heated to a temperature in the order of 140°C. The bitumen is also heated until it becomes liquid because as is known bitumen when at ambient temperature is a rubbery like solid. The two ingredients amorphous polypropylene and bitumen are mixed whilst in the liquid state to provide the adhesive material. The adhesive material is applied whilst still in liquid or semi-liquid state as it cools down and when it has reached a temperature which is such that the surfaces to which the adhesive material is applied will not disintegrate or become impaired as a result of the heat retained in the adhesive material.

Before laminating the surfaces, it may be desirable to pre-treat the surfaces to improve the subsequent adhesion thereof. In any event as with most glueing methods it is desireable that the surfaces be cleaned and dried (by heat or other method) before the amorphous polypropylene is applied thereto, but in addition, the surfaces may for example be etched or sand blasted in the case of metal surfaces to enhance the grip of the amorphous polypropylene thereto. For other surfaces it may be desireable to prime and/or paint one or each of the surfaces before laminating.

The invention it will be understood has wide application. For example in addition to the examples given herein, polypropylene sheets can be laminated to the inside surfaces of steel containers such as hoppers and liquid storage vessels; or other foam polypropylene sheets can be laminated to polystyrene sheets to provide insulation panels suitable for use as internal cladding for walls, roofs etc., such panels being capable of being applied to such walls, roofs etc., by means of a polyvinylacetate (P.V.A) glue such as the P.V.A. glue sold under the name UNIBOND (RTM) which is applied between the polystyrene sheets and the surface to which the panel is to be adhered.

The polypropylene or other plastics material sheet will preferably be rigid in nature and of a thickness in the range 1 - 12 mm. The amorphous polypropylene will preferably be applied in a thickness of approximately 12 mm.

The amorphous polypropylene may include one or more additives to vary the characteristics of the amorphous polypropylene. These additives may be employed to make the polypropylene harder; to make it softer; to accelerate cure time; to delay cure time; to increase adhesion qualities; to enhance etching quality; to change the colour, and so on.

The amount of amorphous polypropylene which is applied between surfaces to be adhered thereby will depend upon the application, but generally speaking the amount which is applied will be consistent with the amount of glue which is normally judged to be appropriate when glueing together two surfaces of two components having regard to the size of the components and weight of same.

By using the amorphous polypropylene as envisaged by the present invention, it has been found that polypropylene sheets can be glued to other surfaces, especially polystyrene foam on the one hand and steel on the other hand but also to brickwork, breeze block for cladding internal walls and to alloy and wood, giving a secure bond, thereby providing a wide range of applications for a relatively little used and relatively inexpensive plastics sheet material.

## Claims

1. A method of laminating two surfaces comprising using amorphous polypropylene when in liquid or semi-liquid state as a glue between the surfaces.

2. A method according to Claim 1, wherein one of said surfaces is defined by one face of rigid polypropylene sheeting.

3. A method according to Claim 2, wherein the other surface is defined by a surface of a sheet, block or other article of polystyrene foam, and the amorphous polypropylene contains a quantity of the synthetic resin ESCOREZ in the amount 5 to 20% by weight.

4. A method according to Claim 3, wherein a block of polystyrene foam has its sides covered by sheets of polypropylene adhered thereto by amorphous polypropylene so as to provide a portion comprising a block of polystyrene sealed in an outer case of polypropylene sheeting.

5. A method according to Claim 3, wherein the polystyrene surface is defined in a polystyrene box carcass the inner and/or outer surfaces of which are sheathed by polypropylene sheeting using the amorphous polypropylene as a glue in order to provide an insulated freight container for aircraft.

6. A method according to any preceding claim wherein the amorphous polypropylene includes bitumen.

7. A method according to Claim 6, wherein the bitumen is contained in a mix with the polypropylene in an amount up to 40% by weight of the mixture.

8. A method according to Claim 7, wherein the bitumen is contained in the mix in an amount of 25% by weight of mixture.

9. A method according to any preceding claim, wherein the surfaces are cleaned and dried before being laminated.

10. A method according to any preceding claim, wherein the surfaces have primer applied thereto before being laminated.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 960 793  (D.S. BOSNIACK)<br>* Column 2, lines 1-49 *<br>--- | 1-20 | C 09 J 123/12<br>C 08 L  23/12 |
| D,X | GB-A-2 126 921  (DAVID FAIRBANK)<br>* Claims 1-7 *<br>--- | 1-20 | |
| X | DE-A-1 569 031  (HERCULES)<br>* Claim 1 *<br>----- | 1-20 | |

TECHNICAL FIELDS SEARCHED (Int. Cl.5)

C 09 J
C 08 L

The present search report has been drawn up for all claims

| Place of search | Date of completion of the search | Examiner |
|---|---|---|
| THE HAGUE | 03-08-1989 | GOOVAERTS R.E. |

EPO FORM 1503 03.82 (P0401)